# EUROPEAN PATENT SPECIFICATION

(11) **EP 3 760 050 B1**
(45) Date of publication and mention of the grant of the patent: **21.06.2023**
(21) Application number: 20192955.1
(22) Date of filing: 27.02.2015
(51) Int. Cl.: A23G 4/06, A23G 3/34, A23G 4/02, A23G 3/26

(54) **METHOD FOR COATING EDIBLE CORES AND THE USE OF A METHOD TO LIMIT THE ADHERENCE OF THE EDIBLE CORES TO THE INNER DRUM WALL**
VERFAHREN ZUR BESCHICHTUNG ESSBARER KERNE UND VERWENDUNG EINES VERFAHRENS ZUR BESCHRÄNKUNG DER HAFTUNG ESSBARER KERNE AN EINER INNEREN TROMMELWAND
PROCEDE D'ENROBAGE DE NOYAUX COMESTIBLES ET UTILISATION D'UN PROCEDE POUR LIMITER L'ADHERENCE DES NOYAUX COMESTIBLES A LA PAROI INTERNE DU FÛT

(30) Priority: 28.02.2014 US 201461946215 P
(43) Date of publication of application: 06.01.2021
(62) Divisional of application: 15708674.5
(73) Proprietor: Intercontinental Great Brands LLC, East Hanover, NJ 07936 (US)
(72) Inventor: BOGDAN-SMIGIELSKA, Ewelina, 81737 Munich (DE); DETAVERNIER, Alexis, 81737 Munich (DE)
(74) Representative: Boult Wade Tennant LLP

(56) References cited:
- WO-A1-01/11984
- WO-A1-99/26484
- WO-A2-00/38532
- ES-T3- 2 348 669

## Description

### BACKGROUND

The present invention related to a method for coating edible cores.

Conventional formation of a hard panned coating onto chewing gum is known. Such processes involve charging chewing gum cores into a rotary pan. Then an appropriate amount of a saccharide solution is added while rotating the rotary pan, to uniformly apply the saccharide solution over the surface of the chewing gum cores to form a saccharide coating over the surface. Moisture is evaporated from the coating to form a crystalline saccharide layer over the surface of the chewing gum core. This procedure is repeated until a saccharide coating layer of the desired thickness is obtained.

Sucrose has been the most commonly employed saccharide material used for forming a hard coating. However, there is increased interest in using non-cariogenic sugar polyols as hard coating materials. Maltitol has been used as a hard coating sugar polyol. However, maltitol is a more expensive material than other sugar polyols such as isomalt. Additionally, maltitol hard coatings provide poorer color and appearance compared to isomalt hard coatings.

The use of isomalt in hard panned coatings is challenging as the resulting coated products are often sticky. During the tumbling and coating process, as the chewing gum cores stick together it creates a large percentage of waste or unacceptable commercial products. Two or more cores stick together during the coating process, which may later separate to have unsatisfactory surface irregularities. Furthermore, the stickiness results in the cores adhering to the coating drum surface causing the necessity to clean the coater's drum, which strongly affects the total process time and efficiency.

WO9926484 discloses a method for coating chewing gum pieces comprising the steps of: providing a rotatable drum having an inner wall that defines an interior, the drum rotating about a longitudinal axis and having a circumferential axis that is perpendicular to the longitudinal axis, a first set of baffles that includes a plurality of baffle blades that extend from the inner wall substantially parallel to each other along the longitudinal axis, each of the baffle blades being oriented at a first angle with respect to the circumferential axis, a second set of baffles that includes a plurality of baffle blades that extend from the inner wall substantially parallel to each other along the longitudinal axis, the blades being oriented at a second angle with respect to the circumferential axis, the second angle being equal to but opposite the first angle; adding a chewing gum piece to the interior; dispensing a solution of coating material to be coated onto the chewing gum piece into the interior; rotating the drum as the solution is dispensed; and drying the coated chewing gum pieces.

There remains a need in the art for an economical isomalt hard coating composition and efficient coating system and method that avoids the problems of stickiness and high recycle levels while at the same time providing a hard coating having a good color and crunchy texture.

### SUMMARY

The present invention discloses a method for coating edible cores, the method comprising: feeding the edible cores and coating material into a drum cavity of a drum coating system, the system comprising: a rotatable drum 18 including an inner drum wall 16 defining the drum cavity; a coating delivery device configured to distribute coating material to the edible cores within said drum cavity; at least one vented portion 24 of said inner drum wall 16, said vented portion 24 including a plurality of openings that allow fluid to flow into and out of said drum cavity; and at least one baffle 14 extending from said inner drum wall 16, said baffle 14 being affixed to said inner drum wall 16 at at least one affixing point 22a, 22b disposed along said vented portion 24; and coating the edible cores via a rotating of the rotatable drum 18, wherein said at least one baffle 14 is affixed to said inner drum wall 16 via at least two legs 20a, 20b extending between said inner drum wall 16 and said at least one baffle 14, at least one of said at least two legs 20a being affixed to said inner drum wall 16 at said at least one affixing point 22a disposed along said vented portion 24, wherein the other of said at least two legs 20b is affixed to said inner drum wall 16 at an affixing point 22b disposed outside of said vented portion 24.

The system further includes a mounting bar 26 at least partially disposed across said vented portion 24, wherein said at least one baffle 14 is affixed to said mounting bar 26 at said at least one affixing point 22a, 22b disposed along said vented portion 24, preferably wherein said at least one baffle 14 is affixed to said inner drum wall 16 via at least two legs 20a, 20b extending between said mounting bar 26 and said at least one baffle 14, at least one of said at least two legs 20a being affixed to said mounting bar 26 at said at least one affixing point 22a disposed along said vented portion 24, and wherein the other of said at least two legs 20b is affixed to said mounting bar 26 at an affixing point 22b disposed outside of said vented portion 24.

Further, said mounting bar 26 is a vented mounting bar including a plurality of openings. Further, said at least one baffle 14 includes a trapezoidal shape.

Further, the relative to a direction of drum rotation: (i) said at least one affixing point 22a disposed along said vented portion 24 is arranged forward of a second affixing point 22b, wherein said second affixing point 22b is disposed outside of said vented portion 24, and/or (ii) said at least one baffle 14 is affixed to said inner drum wall 16 via at least two legs extending between said inner drum wall 16 and said at least one baffle 14, or via two legs extending between a mounting bar at least partially disposed across said vented portion 24 and said at least one baffle 14.

Further, the step of coating the edible cores via a rotating of the rotatable drum 18 comprises: applying an isomalt coating syrup to a surface of an edible core; drying the coated edible core; and repeating the applying and drying steps to form a hard isomalt coated core; the isomalt coating syrup comprising isomalt, a surfactant having an HLB value of greater than 10, and a coating binder.

Further, the isomalt is present in an amount of about 85 to about 98 wt% dry weight of the coating syrup.

Further, the surfactant is a polysorbate or a sucrose ester of fatty acid, and/or wherein the surfactant has an HLB value of greater than 12; or an HLB value of about 13 to about 18.

Further, the surfactant is present in an amount of about 0.01 to about 0.65 wt% dry weight of the coating syrup, preferably wherein the surfactant is polysorbate 60 present in an amount of 0.10 to about 0.65 wt % dry weight of the coating syrup. Further, the coating binder is present in an amount of about 1.0 to about 5.0 wt% dry weight of the coating syrup, and/or wherein the coating binder is gum arabic, pectin, acacia gum, an alginate, agar, a carageenan, guar gum, xanthan gum, locust bean gum, gelatin, gellan gum, a galactomannan, tragacanth gum, karaya gum, curdlan, konjac, chitosan, xyloglucan, beta glucan, furcellaran, gum ghatti, tamarin, a bacterial gum, a modified natural gum, propylene glycol alginate, carboxymethyl locust bean gum, low methoxyl pectin, a modified cellulose, microcrystalline cellulose, carboxymethlcellulose, methylcellulose, hydroxypropylmethylcellulose, hydroxypropylcellulose, or a combination thereof, preferably gum arabic present in an amount of about 1.0 to about 5.0 wt% dry weight of the coating syrup.

The isomalt coating syrup further comprises a sugar polyol syrup, a food acid, a colorant, or a combination thereof.

The method further comprises applying a dry charge, a flavorant, a high intensity sweetener, a sensate, a flavor modulator or potentiator, a food acid or salt thereof, a functional ingredient, a wax, or a combination thereof to the surface of the edible core after an application of the isomalt coating syrup.

The method for coating edible cores further comprises: providing the at least one baffle 14 extending from said inner drum wall 16, said baffle 14 being affixed to said inner drum wall 16 at a forward location relative to rotation of said rotatable drum 18 and a rear location of said rotatable drum 18; disposing at least said forward location at a desirable position relative to said at least one venting portion 24; and limiting adherence of the edible cores to said inner drum wall 16 via said disposing at said forward location at said desirable position relative to said at least one venting portion 24.

The present invention also discloses the use of a method according to claim 5 to limit adherence of the edible cores to said inner drum wall 16.

The above described and other features are exemplified by the following detailed description.

### BRIEF DESCRIPTION OF THE FIGURES

The accompanying drawings incorporated in and forming a part of the specification embodies several aspects of the present invention and, together with the description, serve to explain the principles of the invention. In the drawings:
Figure 1 is a perspective view of an inner wall of a rotatable drum in accordance with the prior art;
Figure 2 is a plan view of a rotatable coating drum for use in a drum coating system;
Figure 3 is a partial view of the drum coating system in accordance with an exemplary embodiment; and
Figure 4 is a partial view of the drum coating system in accordance with another exemplary embodiment.

### DETAILED DESCRIPTION

Disclosed herein is an improved isomalt hard coating process using a surfactant and a coating binder that results in a less sticky coating process, low recycle levels and a significant reduction of cleaning time for the coating equipment. The use of the surfactant as well as proper heating of the coating syrup was found to reduce the surface tension of the coating syrup and improved the wettability of the core surface. The resulting isomalt hard coated product exhibits both good crunchy texture and color.

### Isomalt Hard Coating Composition

The isomalt hard coating composition comprises isomalt, a surfactant having an HLB value of greater than 10, and a coating binder. The isomalt hard coating composition optionally further comprises an additional isomalt hard coating additive such as a colorant, a flavorant, a high intensity sweetener, a sensate, another coating additive, and the like, or a combination thereof. In an embodiment, the isomalt hard coating composition comprises isomalt, a surfactant having an HLB value of greater than 10, a coating binder and a sugar polyol syrup, such as sorbitol syrup, or a food acid, such as citric acid, or a combination of polyol syrup and food acid. The use of the polyol syrup or food acid can help to regulate the spreading efficiency of the syrup and to create a shell that is more resistant to chipping.

Isomalt consists of disaccharide alcohols. Isomalt can be prepared by hydrogenating isomaltulose. Products of the hydrogenation can include 6-O-α-D-glucopyranosyl-D-sorbitol (1,6-GPS); 1-O-α-D-glucopyranosyl-D-sorbitol (1,1-GPS); 1-O-α-D-glucopyranosyl-D-mannitol (1,1-GPM); 6-O-α-D-glucopyranosyl-D-mannitol (1,6-GPM); and mixtures thereof. Some commercially available isomalt materials include an almost equimolar mixture of 1,6-GPS, and 1,1-GPM. Other isomalt materials can include pure 1,6-GPS; pure 1,1-GPS; pure 1,6-GP; or pure 1,1-GPM. Still other isomalt materials can include mixtures of 1,6-GPS; 1,1-GPS; 1,6-GPM; and 1,1-GPM at any ratio. Exemplary commercially available isomalt includes Isomalt ST, including Isomalt ST-M and Isomalt ST-PF, Isomalt GS, Isomalt M, Isomalt DC, and Isomalt LM available from BENEO-Palatinit, Südzucker Group. Isomalt ST has an almost equimolar mixture of 1,6-GPS (43-57%) and 1,1-GPM. Isomalt GS contains 1,6-GPS (75-80%) and 1,1-GPM.

In an embodiment, the isomalt of the isomalt hard coating has an almost equimolar mixture of 1,6-GPS and 1,1-GPM. In another embodiment, the isomalt of the isomalt hard coating has a mixture of 1,1-GPM and 75-80% 1,6-GPS.

The amount of isomalt present in the final hard coating can be about 85 to about 98 weight percent (wt%) dry weight, specifically about 88 to about 96 wt%, and more specifically about 90 to about 94 wt% based on the total weight of the coating.

The isomalt hard coating composition further comprises a surfactant, specifically a surfactant having an HLB value greater than 10, specifically an HLB value of about 11 to about 18, more specifically about 12 to about 17, and yet more specifically about 13 to about 16. Exemplary surfactants include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate (glyceryl monostearate), glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids (including stearate, palminate, and the like), sucroglycerides, propane-1,2-diol esters of fatty acids, or a combination thereof. In an embodiment, the surfactant is a polysorbate including polysorbate 60 (HLB about 15), polysorbate 80 (HLB about 15), polysorbate 20 (HLB about 16.7), polysorbate 40 (HLB about 15.7) or a combination thereof. In an embodiment, the surfactant is a sucrose ester of fatty acid including the family of sucrose ester products available from Sisterna B.V. The Netherlands. Exemplary sucrose esters include SISTERNA Sp70 (HLB about 15), for SISTERNA Sp50 (50% of monoester, HLB about 11), SISTERNA PS750 (75% of monoester, HLB about 16), or a combination thereof.

The amount of surfactant present in the final dry hard coating is about 0.01 to about 0.9 wt%, specifically about 0.07 to about 0.75 wt%, more specifically about 0.1 to about 0.5 wt%, and still yet more specifically about 0.2 to about 0.4wt% based on the total weight of the dry coating.

In an embodiment, the surfactant is polysorbate 60 present in the final dry hard coating at about 0.10 to about 0.9wt%, specifically about 0.12 to about 0.75 wt%, and more specifically 0.2 to about 0.5 wt% based on the total weight of the dry coating.

The surfactant can be present in a coating syrup in an amount of about 0.01 to about 0.65 wt% dry weight of the coating syrup. In an embodiment, the surfactant is polysorbate 60 present in the coating syrup in an amount of 0.10 to about 0.65 wt% dry weight of the coating syrup.

The isomalt hard coating composition further comprises a coating binder. The coating binder can include naturally occurring materials such as plant exudates, seed gums, and seaweed extracts or they can be chemically modified materials such as cellulose, starch, or natural gum derivatives. Furthermore, coating binder materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Modified natural gums include propylene glycol alginate, carboxymethyl locust bean gum, low methoxyl pectin, or a combination thereof. Modified celluloses can be included such as microcrystalline cellulose, carboxymethlcellulose (CMC), methylcellulose (MC), hydroxypropylmethylcellulose (HPMC), hydroxypropylcellulose (HPC), or a combination thereof. In an embodiment, the coating binder is gum arabic.

The amount of coating binder present in the final dry hard coating is about 1.0to about 8.0 wt%, specifically about 1.5 to about 7.0 wt%, more specifically about 2.0 to about 5.0 wt%, and yet more specifically about 2.5 to about 4.0 wt% based on the total weight of the dry coating. In an embodiment, the isomalt hard coating composition comprises gum arabic in an amount of about 1.0 to about 8.0 wt%, specifically about 1.5 to about 7.0 wt%, more specifically about 2.0 to about 5.0 wt%, and yet more specifically about 2.5 to about 4.0 wt% based on the total weight of the dry coating.

In an embodiment, the isomalt hard coating composition may comprise small amounts of an additional sugar polyol (also referred to as "sugar alcohol") including erythritol, galactitol, a hydrogenated starch hydrolysate, lactitol, maltitol, mannitol, polyglycitol, sorbitol, xylitol, or a combination thereof. The sugar polyol ingredient to prepare the isomalt hard coating composition can be in powdered or syrup form. The presence of the other sugar polyol can be in an amount of 0 to about 15 wt%, specifically, 0 to about 10 wt%, and yet more specifically 0 to about 5 wt% based on the total weight of the dry coating.

The isomalt hard coating composition may also further comprise a flavorant. Exemplary flavorants (flavor, flavoring agent) that can be used include those artificial or natural flavors known in the art, for example synthetic flavor oils, natural flavoring aromatics and/or oils, oleoresins, extracts derived from plants, leaves, flowers, fruits, and the like, or a combination thereof. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, or a combination thereof. Specific flavorants are mints such as peppermint, spearmint, artificial vanilla, cinnamon derivatives, and various fruit flavors.

Other types of flavorants include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin).

The flavorant can be used in liquid or solid form. The flavorant can be added during the coating process as a separate, direct addition to the coating drum or as a component of a coating syrup, specifically as a separate addition.

More than one flavorant can be used in the isomalt coating composition. The amount and type of flavorant used in the isomalt coating composition can be chosen based on the targeted release profile and flavor intensity desired. Exemplary amounts of flavorant present in the final hard coating is about 0.01 to about 1.0 wt%, specifically about 0.1 to about 0.8 wt%, and more specifically 0.2 to about 0.6 wt% based on the total weight of the dry coating.

The isomalt hard coating composition may also further comprise a colorant. Coloring agents (colors, colorants, colorings) can be used in amounts effective to produce a desired color for the coating. Suitable coloring agents include pigments, natural food colors and dyes suitable for food, drug, and cosmetic applications. Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), or a combination thereof. In an embodiment, certified colors can include FD&C aluminum lakes, or a combination thereof. A full recitation of all FD& C colorants and their corresponding chemical structures may be found in the Kirk-Othmer Encyclopedia of Chemical Technology, 4th Edition, in volume 1 at pages 492-494.

The colorant can be added during the coating process as a separate, direct addition to the coating drum or as a component of a coating syrup, specifically as a component of a coating syrup.

The isomalt hard coating composition may also further comprise a high intensity sweetener. A "high intensity sweetener" as used herein means agents having a sweetness greater than the sweetness of sucrose. In an embodiment, a high intensity sweetener has a sweetness that is at least 100 times that of sugar (sucrose) on a per weight basis, specifically at least 500 times that of sugar on a per weight basis. In an embodiment the high intensity sweetener is at least 1,000 times that of sugar on a per weight basis, more specifically at least 5,000 times that of sugar on a per weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include:
water-soluble sweetening agents such as dihydrochalcones, monellin, steviosides, rebaudiosides, glycyrrhizin, dihydroflavenol, monatin, and L-aminodicarboxylic acid aminoalkenoic acid ester amides, such as those disclosed in U.S. Pat. No. 4,619,834, or a combination thereof;
water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination thereof; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenyl glycerine and L-aspartyl-L-2,5-dihydrophenyl-glycine, L-aspartyl-2,5-dihydro-L-phenylalanine; L-aspartyl-L-(l-cyclohexen)-alanine, neotame, or a combination thereof;
water-soluble sweeteners derived from naturally occurring water-soluble sweeteners, such as steviosides and stevia derived compounds such as but not limited to steviol glycosides such as rebaudiocides including rebaudiocide A, and the like, lo han quo and lo han quo derived compounds such as iso-mogroside V and the like, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-l-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; 4,6,1',6'-tetradeoxy-sucrose, or a combination thereof;
protein based sweeteners such as thaumaoccous danielli, talin, or a combination thereof; and
amino acid based sweeteners.

The high intensity sweetener can be added during the coating process as a separate, direct addition to the coating drum or as a component of a coating syrup.

The isomalt hard coating composition may also further comprise a sensate. Exemplary sensates include cooling agents, warming agents, tingling agents, or a combination thereof. The sensate can be added during the coating process as a separate, direct addition to the coating drum or as a component of a coating syrup, specifically as a separate addition.

Coolants are additives that provide a cooling or refreshing effect in the mouth, in the nasal cavity, or on skin. For example, among the useful cooling agents are included menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-2,2-diisopropylbutanamide, N-ethyl-p-menthane-3-carboxamide (WS-3), ethyl ester of N-[[5-methyl-2-(1-methylethyl)cyclohexyl]carbonyl]glycine (WS-5), as well as the substantially pure ethyl ester of N-[[5-methyl-2-(1-methylethyl)cyclohexyl]carbonyl]glycine as disclosed in U.S. Patent No. 7,189,760 to Erman, et al which is incorporated in its entirety herein by reference, isopulegol, menthyloxy propane diol, 3-(l-menthoxy)propane-1,2-diol, 3-(l-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, N-(4-cyanomethylphenyl) p-menthanecarboxamide (G-180), Japanese mint oil, peppermint oil, 3-(l-menthoxy)ethan-1-ol, 3-(l-menthoxy)propan-1-ol, 3-(l-menthoxy)butan-1-ol, l-menthylacetic acid N-ethylamide, l-menthyl-4-hydroxypentanoate, l-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT^{®} type MGA); 3-l-menthoxypropane-1,2-diol (from Takasago, FEMA 3784); and menthyl lactate; (from Haarman & Reimer, FEMA 3748, tradename FRESCOLAT^{®} type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic α-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one, compounds of the formula: 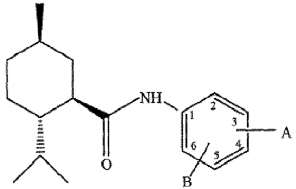 wherein B is selected from H, CH₃, C₂H₅, OCH₃, OC₂H₅; and OH; and wherein A is a moiety of the formula-CO-D, wherein D is selected from the following moieties: (i)-NR¹R², wherein R¹ and R² are independently selected from H and C₁-C₈ straight or branched-chain aliphatic, alkoxyalkyl, hydroxyalkyl, araliphatic and cycloalkyl groups, or R¹ and R² together with the nitrogen atom to which they are attached form part of an optionally-substituted, five-or six-membered heterocyclic ring; (ii)-NHCH₂COOCH₂CH₃,-NHCH₂CONH₂,-NHCH₂CH₂OCH₃,-NHCH₂CH₂OH,-NHCH₂CH(OH)CH₂OH and (iii) a moiety selected from the group consisting of: 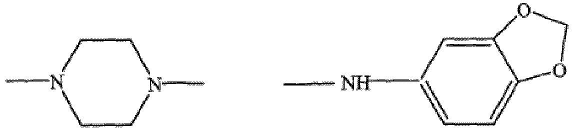 as disclosed in PCT Patent Application WO2006/125334 to Bell et al. Other compounds include the alpha-keto enamines disclosed in U.S. Patent No. 6,592,884 to Hofmann et al. These and other suitable cooling agents are further described in the following U.S. patents, U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Published Patent Applications, U.S. 2005/0222256; 2005/0265930.

Warming agents can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming agents included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamylether, vanillyl alcohol n-hexylether, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, or a combination thereof.

In an embodiment, tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin; or a combination thereof. In an embodiment, alkylamides extracted from materials such as jambu or sanshool may be included.

The isomalt hard coating composition may also further comprise other additional coating additives such as a flavor modulator or potentiator, a food acid or salt thereof, a functional ingredient, a wax, or a combination thereof. The other additional coating additive can be added during the coating process as a separate, direct addition to the coating drum or as a component of a coating syrup, specifically as a separate addition.

Exemplary food acids and food acid salts include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, and alkali metal salts thereof (e.g., sodium citrate dihydrate), or a combination thereof.

Exemplary functional ingredients include a breath freshener, a dental care component, an active, an herbal, an effervescing system, an appetite suppressor, a vitamin, a micronutrient, a mouth moistening component, a throat care component, an energy boosting agent, a concentration boosting agent, or a combination thereof.

Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In an embodiment, flavor modulators or potentiators are designed to intensify, supplement, modify, or enhance the perception of flavor, sweetness, tartness, umami, kokumi, saltiness or a combination thereof can be included.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs), or a combination thereof. In an embodiment, sugar acids, sodium chloride, potassium chloride, sodium acid sulfate, or a combination thereof are used. In an embodiment, glutamates such as monosodium glutamate, monopotassium glutamate, hydrolyzed vegetable protein, hydrolyzed animal protein, yeast extract, or a combination thereof are included. Further examples include adenosine monophosphate (AMP), glutathione, and nucleotides such as inosine monophosphate, disodium inosinate, xanthosine monophosphate, guanylate monophosphate, or a combination thereof. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final product composition, the individual flavor, and the strength of flavor desired. Thus, the amount of flavoring can be varied in order to obtain the result desired in the final product and such variations are within the capabilities of those skilled in the art without the need for undue experimentation.

### Coating System and Process Generally

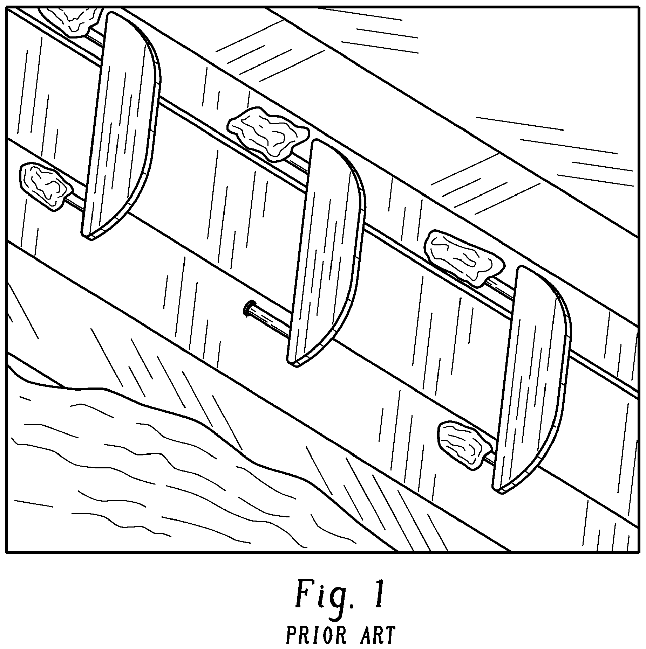

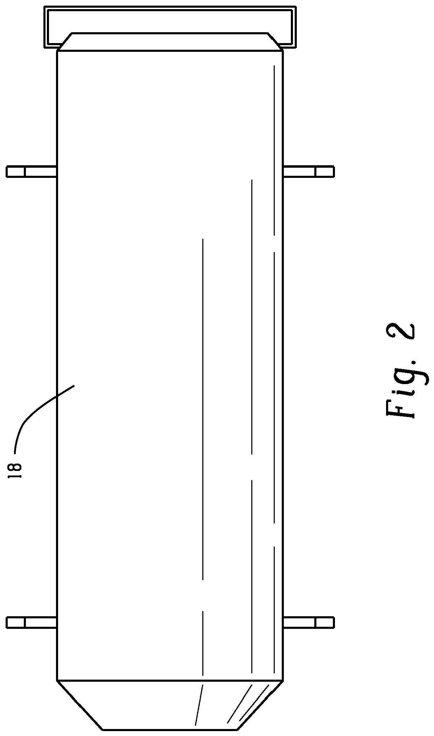

Referring to Figures 2-4 a drum coating system 10 for coating edible cores 12 is illustrated. As shown in the Figures, the system includes baffles 14 that are affixed to an inner wall 16 of one or more rotatable drums 18 including a coating material delivery device (not shown) configured to deliver coating material to a cavity defined by the drum. As will be explained below, the baffles 14 are affixed to the inner wall 16 in a manner that reduces occurrences of core adherence to the inner wall 16 relative to prior art systems such as that shown in Figures 1.

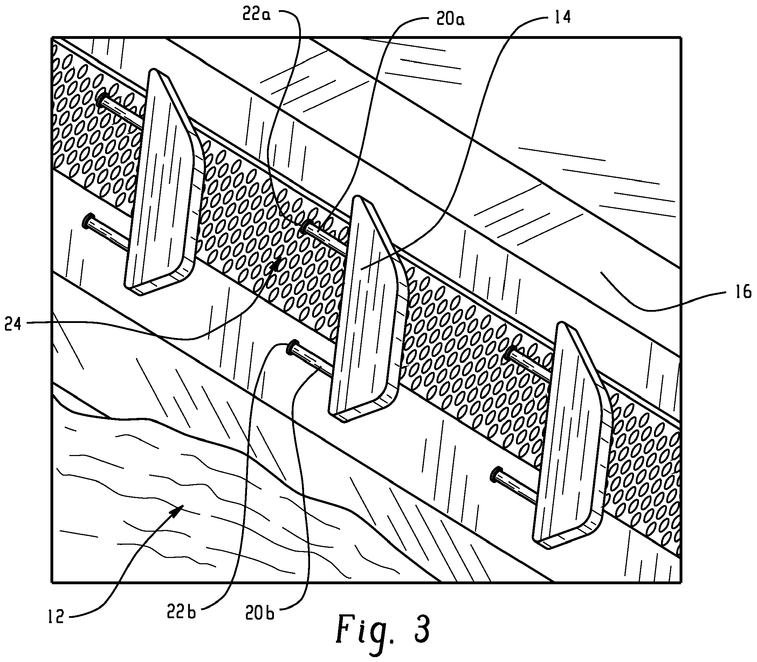

Indeed, as shown in Figure 1, prior art systems are susceptible to core build up at least at the baffle leg disposed at a forward position relative to rotation of the drum (if the drum is rotating clockwise). Notably, the forward position in prior art systems is situated outside of the vented or perforated portion. This build up is significantly reduced (and nearly eliminated) in the system 10 as shown in Figure 3.

In the exemplary embodiment of the system 10 shown in Figure 3, the baffle 14 is affixed to the inner wall 16 via two baffle legs 20a and 20b. If the drum 18 rotates in a clockwise direction (which is the case in this embodiment), the leg 20a affixes the baffle 14 to the inner wall 16 at forward affixing point 22a, and the leg 20b affixes the baffle 14 to the inner wall 16 at rear affixing point 22b.

As shown in Figure 3, in addition to the baffle 14, the inner wall 16 includes at least one vented or perforated portion 24. The vented portion 24 includes a plurality of openings that allow fluid to flow into and out of the drum cavity. In the exemplary embodiment of the system 10 as shown in Figure 3, the forward affixing point 22a that affixes the baffle 14 to the inner wall 16 is disposed along or within a perimeter defining the vented portion 24. By positioning the forward affixing point 22a within this vented area 24, fluid dynamics are created within the drum cavity and around the baffle 14 that reduce instances of cores 12 adhering to the inner wall 16 during and after drum rotation, particularly at the forward affixing point 22a. In addition, it is contemplated that the trapezoidal shape of the baffle 14 assists in reducing adherence of the cores 12 to the inner wall 16.

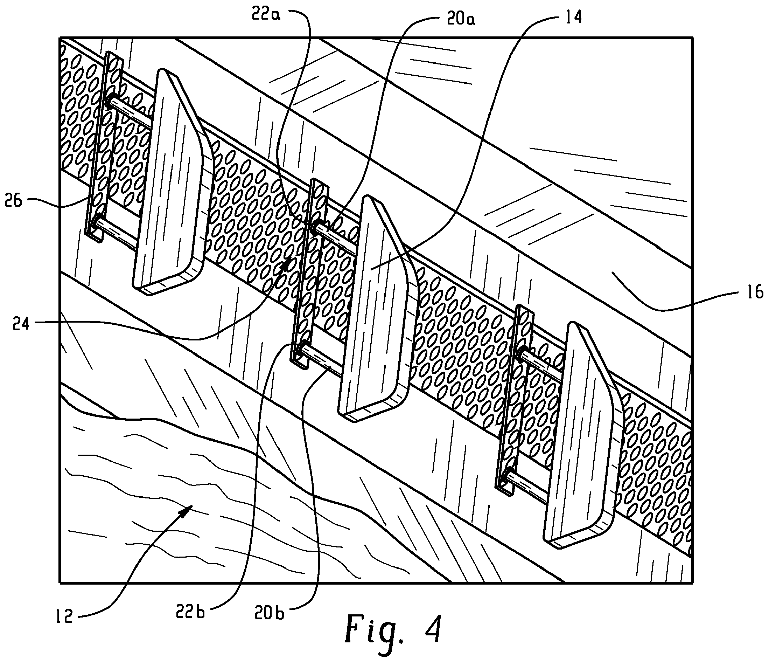

Referring now to Figure 4, the system 10 is shown with the baffle 14 situated similarly to that shown in Figure 3, except the system 10 of Figure 4 further includes a vented or perforated bar 26 extending across the vented portion 24. In the exemplary embodiment of Figure 4, the vented bar is mounted on to the inner wall 16, and the baffle 14 is mounted to the vented bar 26. Hereagain, the forward affixing point 22a affixes the baffle 14 to the inner wall 16 at a point disposed along or within a perimeter defining the vented portion 24. In this exemplary embodiment however the baffle 14 is affixed to the vented portion 24 via the leg 20a and the vented bar 26. Similarly to the embodiment shown in Figures 3, the embodiment shown in Figure 4 results in fluid dynamics in the drum cavity that reduces core adherence to the inner wall 16.

It should be appreciated that the system 10 as shown in Figures 2-4 may be employed in the isomalt hard coating process for edible cores discussed hereinbelow.

### Isomalt Hard Coating Process

In a generalized coating process, an isomalt coating syrup comprising isomalt, a surfactant, a coating binder, and water is applied in numerous thin layers to edible cores with drying in between each application in order to form an appropriate uniform coated and finished quality surface on the final products. The isomalt hard coating syrup is sprayed onto edible cores as they pass through a coating mechanism or a coating tunnel and are tumbled and rotated therein. In addition, warm air is circulated or forced into the coating tunnel or mechanism in order to dry each of the successive coating layers on the formed products.

Two or more different isomalt coating syrups can be used to prepare a single coated product, used in various stages of the coating process. The different isomalt coating syrups can vary by the type or amount of additional coating additive, e.g. varying colorants. For example, a first coating syrup containing isomalt, a surfactant, a coating binder, titanium dioxide and water can be used at the early stages of the coating process to build up a hard layer of white-colored isomalt hard coating. At a latter stage of coating, a second coating syrup containing isomalt, a surfactant, a coating binder, a non-white colorant and water can be applied to result in a non-white hard isomalt coating.

At the initial stage of the coating process, a dry charge of powdered isomalt can be applied after application of the isomalt coating syrup to absorb excess moisture and to accelerate the process of crystallization. In addition, the dry charge aids in covering the edible core surface faster and to reduce the sticky behavior of isomalt at the early stage in the process.

Optionally, certain additional coating additives can be added during the coating process separate from the application of the coating syrups, including the addition of flavorants, food acids, sensates, and the like or a combination thereof.

In an embodiment, applications of an edible wax or any other glazing agents can be applied during the latter stages of the coating process. Exemplary edible wax include carnauba wax, beeswax, vegetable wax, candelilla wax, edible petroleum waxes, and the like, or a combination thereof. Glazing agents in include shellac and the like.

The coating process can be continuous or batch. Commercially available coating pans and equipment can be used.

The isomalt hard coating is distinct from soft coatings not only by the difference in their physical properties, but also by how they are made. Soft coatings do not have the hard crunch and texture by nature.

### Edible cores

The edible cores that can be coated with the hard isomalt coating composition can be from a wide variety of types as long as the core has an appropriate shape for pan coating. Exemplary edible cores include chewing gum (ball, cushion, pellet, pillow, etc.), a confectionery, a nut or nut piece, a dried fruit or dried fruit piece, and the like. Exemplary confectionery material includes a caramel, a chewy candy, a chocolate, a fondant, a fudge, a gummy, a hard candy, a licorice, a low boiled candy, a nougat, a pastille, a pressed mint, and the like, or a combination thereof.

In an embodiment, the edible core is a chewing gum.

In general the chewing gum composition of the chewing gum core comprises a gum base and a bulk sweetener or a gum base polymer and a bulk sweetener. When combined with the gum base or gum base polymer, the bulk sweetener can be in powdered form or in molten form depending upon the desired texture of the chewing gum composition.

The bulk sweetener of the chewing gum composition can be a sugar-based or sugar-free bulk sweetener, specifically sugar-free. Bulk sugar sweeteners generally include saccharides. Suitable sugar sweeteners include mono-saccharides, di-saccharides and polysaccharides, for example, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose corn syrup, or a combination thereof.

The bulk sweetener can also be a sugar-free bulk sweetener such as a sugar sugar polyol. The sugar polyol can be erythritol, galactitol, isomalt, a hydrogenated starch hydrolyzate, lactitol, maltitol, mannitol, polyglycitol, sorbitol, xylitol, and the like, or a combination thereof. The sugar polyol can be in powdered or particulate form (either crystalline or amorphous), molten (melted) form having a low moisture content (e.g. less than 10 wt%, specifically less than 5 wt%), or in syrup form (also referred to as "solution") with water. Exemplary sugar polyol syrups include sorbitol syrup, maltitol syrup, hydrogenated starch hydrolysate syrup, polyglycitol syrup, and the like.

The amount of bulk sweetener in the chewing gum composition can be about 1 to about 85 wt% based on the total weight of the chewing gum composition, specifically about 10 to about 75 wt%, more specifically about 20 to about 70 wt%, yet more specifically about 30 to about 65 wt%, and yet more specifically about 40 to about 60 wt%.

In an embodiment, the chewing gum composition is sugar-free.

The chewing gum may further comprise an additional ingredient wherein the additional ingredient is a flavorant, a fat, a high intensity sweetener, a food acid or salt thereof, a sensate, a flavor modulator or potentiator, a coloring agent, a humectant, a salt, a softener, or a combination thereof.

The chewing gum composition may optionally further comprise a humectant. Exemplary humectants include glycerin, propylene glycol, polyethylene glycol, or a combination thereof. The amount of humectant can be controlled to ensure the final chewing gum product does not unduly absorb moisture from the surrounding environment during production, packaging, storage, and use.

The chewing gum composition may further include a softener, such as those described herein for use in the gum base.

The chewing gum composition comprises a chewing gum base or a gum base polymer. In an embodiment, the chewing gum comprises a gum base comprising an elastomer and optionally an additional gum base ingredient, wherein the additional gum base ingredient is a resin, a fat, an emulsifier, a wax, a filler, a softener, a plasticizer, an antioxidant, or a combination thereof.

As used herein, the term "gum base" refers to water insoluble material(s) and can include, for example, elastomers, resins, waxes, elastomer solvents, emulsifiers, plasticizers, bulking agents/fillers, or a combination thereof.

The amount of gum base employed will vary depending upon various factors such as the type of base used, the consistency of the chewing gum desired, and the other components used in the composition to make the final chewing gum product. In general, the gum base will be present in amounts of about 5 to about 65 wt% based on the total weight of the chewing gum composition, specifically about 10 to about 55 wt%, more specifically about 15 to about 45 wt%, and yet more specifically about 20 to about 35 wt%.

Exemplary elastomers to be used in the chewing gum base include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like, or a combination thereof. Synthetic elastomers such as butadiene-styrene copolymers, polyisobutylene, isobutyleneisoprene copolymers, polyethylene, a combination thereof, and the like, or a combination thereof are also useful. The gum base can include a non-toxic vinyl polymer, such as polyvinyl acetate and its partial hydrolysate, polyvinyl alcohol, or a combination thereof. When utilized, the molecular weight of the vinyl polymer can range from about 3,000 up to and including about 94,000. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate, or a combination thereof.

Conventional additives can be included in the gum base in effective amounts such as plasticizers or softeners to provide a variety of desirable textures and consistency properties. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerin, or a combination thereof. Some of these ingredients may be added at the time of gum base formation or added later during the production of the chewing gum composition.

Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, and the like, or a combination thereof, can also be incorporated into the gum base to obtain a variety of desirable textures and consistency properties.

When a wax is present in the gum base, it softens the polymeric elastomer mixture and improves the elasticity of the gum base. The waxes employed may have a melting point below about 60° C, and specifically between about 45° C and about 55° C. The low melting wax can be a paraffin wax. The wax can be present in the gum base in an amount of about 0.1 to about 10 wt%, and specifically about 3 to about 7 wt% based on the total weight of the gum base.

In addition to the low melting point waxes, waxes having a higher melting point can be used in the gum base in amounts up to about 5 wt% based on the total weight of the gum base. Such high melting waxes include beeswax, vegetable wax, candelilla wax, camuba wax, most petroleum waxes, and the like, or a combination thereof.

The gum base can optionally contain conventional elastomer solvents to aid in softening the elastomer base component, for example resins such as polymers of alpha-pinene or beta-pinene; methyl, glycerol or pentaerythritol esters of rosins or modified rosins and gums, such as hydrogenated, dimerized or polymerized rosins, or a combination thereof; the pentaerythritol ester of partially hydrogenated wood or gum rosin; the pentaerythritol ester of wood or gum rosin; the glycerol ester of wood rosin; the glycerol ester of partially dimerized wood or gum rosin; the glycerol ester of polymerized wood or gum rosin; the glycerol ester of tall oil rosin; the glycerol ester of wood or gum rosin; the partially hydrogenated wood or gum rosin; the partially hydrogenated methyl ester of wood or rosin; and the like; or a combination thereof. The elastomer solvent can be used in amounts of about 5 to about 75 wt% base on the total weight of the gum base, and specifically about 45 to about 70 wt%.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, or a combination thereof. These fillers or adjuvants can be used in the gum base in various amounts. Specifically the amount of filler, when used, can be present in an amount of greater than about 5 to about 60 wt% based on the total weight of the gum base, and more specifically from about 20 to about 30 wt%.

Suitable emulsifiers for use in the gum base include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate, lecithin, ammonium phosphatide, sucrose esters of fatty acids, sucroglycerides, propane-1,2-diol esters of fatty acids, or a combination thereof.

The chewing gum composition can be prepared using standard techniques and equipment known in the art. Furthermore, the chewing gum composition can be prepared into chewing gum cores using standard techniques and equipment known in the art. Likewise, the confectionery can be prepared into confectionery cores using standard techniques and equipment known in the art.

The hard coated edible product can be packaged using techniques and equipment known in the art. For example packaging cartons, cups, blister trays, and the like can be used. In an embodiment is a packaged product that includes a hard coated edible product wherein the package has indicia on an outer surface that is indicative of the product contained in the package.

In an embodiment, the isomalt coated chewing gum product can comprise a center-fill.

The features and advantages are more fully shown by the following examples which are provided for purposes of illustration, and are not to be construed as limiting the invention in any way.

### EXAMPLES

### Example 1.

Chewing gum cores in the shape of pellets were hard coated in a pan coating process using an isomalt coating syrup containing Isomalt ST, gum arabic, a colorant, and polysorbate 60 a surfactant having an HLB of about 15. The syrup was prepared by combining the Isomalt ST, gum arabic and the surfactant with an appropriate amount of water and heated. The cores were coated using a coating machine, e.g. Driam coater. The coating was made by successive applications of the coating syrup to the cores with a drying step in between. A dry charge of isomalt powder was applied at the early stages of the process. Additionally, an application of a flavorant was made partway through the coating process. The process was monitored for Cleaning Time (minutes), Recycle Total (percent), and Recycle Agglomerates (percent). Recycle Agglomerates includes agglomerates of the cores into doubles, triples, quadruples etc. Recycle Total means the total of recycle agglomerates and other unacceptable products such as too thick, too thin pellets or twins obtained by poor cores separation at breaking step. A comparative coating process using a coating syrup free of surfactant was also conducted. The results are in Table 1.

**Table 1.**

| Finished Coating (Flavor/color) | Surfactant % in syrup, dry wt | Cleaning Time (minutes) | Recycle total (percent) | Recycle agglomerates (percent) | Comments |
|---|---|---|---|---|---|
| Peppermint/blue, comparative | 0% | 14.0 | 8.3% | 8.1% | 0 |
| Peppermint/blue | Polysorbate 60 0.25% | 2.0 | 0.6% | 0.6% | 12 min of coating time reduction vs process without surfactant |

As can be seen by the results in Table 1, addition of the surfactant to the isomalt coating syrup resulted in a significant reduction of pellet stickiness to coater drum and strength of agglomerate giving 1) much lower recycle levels; 2) short cleaning time; and 3) better spreading efficiency of syrup giving better quality (smooth surface even with short spreading time and high dry charge level).

Additional experiments conducted with coating syrups prepared with 0.15% or 0.20% dry weight polysorbate 60, or SISTERNA Sp70 (non-ionic surfactant that is a sucrose ester of fatty acid (stearate)) also resulted in lower recycle levels and shorter cleaning times than the comparative process conducted in the absence of a surfactant.

### Example 2.

Chewing gum cores in the shape of pellets were hard coated in a pan coating process using two isomalt coating syrups. A first coating syrup contained Isomalt ST, gum arabic, titanium dioxide, and polysorbate 60. The second coating syrup contained Isomalt ST, gum arabic, a natural liquid colorant, and polysorbate 60. The syrups were prepared by combining the Isomalt ST (88.67-96.00 wt% dry), gum arabic (2,8%-4,3% wt% dry), colorant, and polysorbate 60 (0.14-0.16 wt% dry) with an appropriate amount of water and heated to a syrup concentration (Brix) of 69 ± 1% and a syrup temperature of 74 ± 2 °C. The cores were coated using a coating machine, e.g. Driam coater. The coating was made by successive applications of the first coating syrup to the cores with a drying step in between each coating. A dry charge of powdered Isomalt ST was applied after the syrup application during the early portion of the coating process. An application of a flavorant was made partway through the coating process. After several phases of the first coating syrup was applied, the second coating syrup was used to form the final color hard coating with several applications of a wax. The coating process proceeded with low incidents of agglomerates. The resulting hard isomalt coated chewing gum cores exhibited good crunch and color.

As used herein the terms "comprising" (also "comprises," etc.), "having," and "including" is inclusive (open-ended) and does not exclude additional, unrecited elements or method steps. The singular forms "a," "an," and "the" include plural referents unless the context clearly dictates otherwise. The endpoints of all ranges directed to the same characteristic or component are independently combinable, and inclusive of the recited endpoint. The term "a combination thereof' is inclusive two or more components of the list. The term "homogeneous" refers to a uniform blend of the components.

While the invention has been described with reference to an exemplary embodiment, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for coating edible cores, the method comprising:
feeding the edible cores and coating material into a drum cavity of a drum coating system, the system comprising:
a rotatable drum (18) including an inner drum wall (16) defining the drum cavity;
a coating delivery device configured to distribute coating material to the edible cores within said drum cavity;
at least one vented portion (24) of said inner drum wall (16), said vented portion (24) including a plurality of openings that allow fluid to flow into and out of said drum cavity; and
at least one baffle (14) extending from said inner drum wall (16), said baffle (14) being affixed to said inner drum wall (16) at at least one affixing point (22a, 22b) disposed along said vented portion (24); and
coating the edible cores via a rotating of the rotatable drum (18),
wherein said at least one baffle (14) is affixed to said inner drum wall (16) via at least two legs (20a, 20b) extending between said inner drum wall (16) and said at least one baffle (14), at least one of said at least two legs (20a) being affixed to said inner drum wall (16) at said at least one affixing point (22a) disposed along said vented portion (24), wherein the other of said at least two legs (20b) is affixed to said inner drum wall (16) at an affixing point (22b) disposed outside of said vented portion (24).

2. The method of claim 1, wherein the system further includes a mounting bar (26) at least partially disposed across said vented portion (24), wherein said at least one baffle (14) is affixed to said mounting bar (26) at said at least one affixing point (22a, 22b) disposed along said vented portion (24), preferably wherein said at least one baffle (14) is affixed to said inner drum wall (16) via at least two legs (20a, 20b) extending between said mounting bar (26) and said at least one baffle (14), at least one of said at least two legs (20a) being affixed to said mounting bar (26) at said at least one affixing point (22a) disposed along said vented portion (24), and wherein the other of said at least two legs (20b) is affixed to said mounting bar (26) at an affixing point (22b) disposed outside of said vented portion (24).

3. The method of claim 2, wherein said mounting bar (26) is a vented mounting bar including a plurality of openings.

4. The method of claim 1, wherein said at least one baffle (14) includes a trapezoidal shape.

5. The method of any of claims 1 to 4, wherein relative to a direction of drum rotation:
(i) said at least one affixing point (22a) disposed along said vented portion (24) is arranged forward of a second affixing point (22b), wherein said second affixing point (22b) is disposed outside of said vented portion (24),
and/or
(ii) said at least one baffle (14) is affixed to said inner drum wall (16) via at least two legs extending between said inner drum wall (16) and said at least one baffle (14), or via two legs extending between a mounting bar at least partially disposed across said vented portion (24) and said at least one baffle (14).

6. The method of any one of claims 1-5, wherein the step of coating the edible cores via a rotating of the rotatable drum (18) comprises:
applying an isomalt coating syrup to a surface of an edible core;
drying the coated edible core; and
repeating the applying and drying steps to form a hard isomalt coated core;
the isomalt coating syrup comprising isomalt, a surfactant having an HLB value of greater than 10, and a coating binder.

7. The method of claim 6, wherein the isomalt is present in an amount of about 85 to about 98 wt% dry weight of the coating syrup.

8. The method of claim 6 or claim 7, wherein the surfactant is a polysorbate or a sucrose ester of fatty acid, and/or wherein the surfactant has
an HLB value of greater than 12; or
an HLB value of about 13 to about 18.

9. The method of any one of claims 6-8, wherein the surfactant is present in an amount of about 0.01 to about 0.65 wt% dry weight of the coating syrup, preferably wherein the surfactant is polysorbate 60 present in an amount of 0.10 to about 0.65 wt% dry weight of the coating syrup.

10. The method of any one of claims 6-9, wherein the coating binder is present in an amount of about 1.0 to about 5.0 wt% dry weight of the coating syrup, and/or wherein the coating binder is gum arabic, pectin, acacia gum, an alginate, agar, a carageenan, guar gum, xanthan gum, locust bean gum, gelatin, gellan gum, a galactomannan, tragacanth gum, karaya gum, curdlan, konjac, chitosan, xyloglucan, beta glucan, furcellaran, gum ghatti, tamarin, a bacterial gum, a modified natural gum, propylene glycol alginate, carboxymethyl locust bean gum, low methoxyl pectin, a modified cellulose, microcrystalline cellulose, carboxymethlcellulose, methylcellulose, hydroxypropylmethylcellulose, hydroxypropylcellulose, or a combination thereof, preferably gum arabic present in an amount of about 1.0 to about 5.0 wt% dry weight of the coating syrup.

11. The method of any one of claims 6-10, wherein the isomalt coating syrup further comprises a sugar polyol syrup, a food acid, a colorant, or a combination thereof.

12. The method of any one of claims 6-11, further comprising applying a dry charge, a flavorant, a high intensity sweetener, a sensate, a flavor modulator or potentiator, a food acid or salt thereof, a functional ingredient, a wax, or a combination thereof to the surface of the edible core after an application of the isomalt coating syrup.

13. The method for coating edible cores of claim 1, the method comprising:
providing the at least one baffle (14) extending from said inner drum wall (16), said baffle (14) being affixed to said inner drum wall (16) at a forward location relative to rotation of said rotatable drum (18) and a rear location of said rotatable drum (18);
disposing at least said forward location at a desirable position relative to said at least one venting portion (24); and
limiting adherence of the edible cores to said inner drum wall (16) via said disposing at said forward location at said desirable position relative to said at least one venting portion (24).

14. Use of a method according to claim 5 to limit adherence of the edible cores to said inner drum wall (16).

## Patentansprüche

1. Verfahren zum Beschichten von essbaren Kernen, wobei das Verfahren Folgendes umfasst:
Zuführen der essbaren Kerne und des Beschichtungsmaterials in einen Trommelhohlraum eines Trommelbeschichtungssystems, wobei das System Folgendes umfasst:
eine drehbare Trommel (18), die eine innere Trommelwand (16) einschließt, die den Trommelhohlraum definiert;
eine Beschichtungsabgabevorrichtung, die so konfiguriert ist, dass sie Beschichtungsmaterial auf die essbaren Kerne in dem Trommelhohlraum verteilt;
mindestens einen belüfteten Abschnitt (24) der inneren Trommelwand (16), wobei der belüftete Abschnitt (24) eine Vielzahl von Öffnungen einschließt, die es einer Flüssigkeit ermöglichen, in den Trommelhohlraum hinein und aus ihm heraus zu fließen; und
mindestens ein Ablenkblech (14), das sich von der inneren Trommelwand (16) erstreckt, wobei das Ablenkblech (14) an der inneren Trommelwand (16) an mindestens einem Befestigungspunkt (22a, 22b) befestigt ist, der entlang des belüfteten Abschnitts (24) angeordnet ist; und
Beschichten der essbaren Kerne durch Drehen der drehbaren Trommel (18),
wobei das mindestens eine Ablenkblech (14) an der inneren Trommelwand (16) über mindestens zwei Füße (20a, 20b) befestigt ist, die sich zwischen der inneren Trommelwand (16) und dem mindestens einen Ablenkblech (14) erstrecken, wobei mindestens einer der mindestens zwei Füße (20a) an der inneren Trommelwand (16) an dem mindestens einen Befestigungspunkt (22a) befestigt ist, der entlang des belüfteten Abschnitts (24) angeordnet ist, wobei der andere der mindestens zwei Füße (20b) an der inneren Trommelwand (16) an einem Befestigungspunkt (22b) befestigt ist, der außerhalb des belüfteten Abschnitts (24) angeordnet ist.

2. Verfahren nach Anspruch 1, wobei das System ferner eine Montagestange (26) einschließt, die mindestens teilweise über dem belüfteten Abschnitt (24) angeordnet ist, wobei das mindestens eine Ablenkblech (14) an der Montagestange (26) an dem mindestens einen Befestigungspunkt (22a, 22b) befestigt ist, der entlang des belüfteten Abschnitts (24) angeordnet ist, wobei das mindestens eine Ablenkblech (14) vorzugsweise an der inneren Trommelwand (16) über mindestens zwei Füße (20a, 20b) befestigt ist, die sich zwischen der Montagestange (26) und dem mindestens einen Ablenkblech (14) erstrecken, wobei mindestens einer der mindestens zwei Füße (20a) an der Montagestange (26) an dem mindestens einen Befestigungspunkt (22a) befestigt ist, der entlang des belüfteten Abschnitts (24) angeordnet ist, und wobei der andere der mindestens zwei Füße (20b) an der Montagestange (26) an einem Befestigungspunkt (22b) befestigt ist, der außerhalb des belüfteten Abschnitts (24) angeordnet ist.

3. Verfahren nach Anspruch 2, wobei die Montagestange (26) eine belüftete Montagestange ist, die eine Vielzahl von Öffnungen einschließt.

4. Verfahren nach Anspruch 1, wobei das mindestens eine Ablenkblech (14) eine Trapezform einschließt.

5. Verfahren nach einem der Ansprüche 1 bis 4, wobei relativ zu einer Drehrichtung der Trommel:
(i) der mindestens eine Befestigungspunkt (22a), der entlang des belüfteten Abschnitts (24) angeordnet ist, vor einem zweiten Befestigungspunkt (22b) eingerichtet ist, wobei der zweite Befestigungspunkt (22b) außerhalb des belüfteten Abschnitts (24) angeordnet ist,
und/oder
(ii) das mindestens eine Ablenkblech (14) an der inneren Trommelwand (16) über mindestens zwei Füße, die sich zwischen der inneren Trommelwand (16) und dem mindestens einen Ablenkblech (14) erstrecken, oder über zwei Füße, die sich zwischen einer Montagestange, die mindestens teilweise über dem belüfteten Teil (24) angeordnet ist, und dem mindestens einen Ablenkblech (14) erstrecken, befestigt ist.

6. Verfahren nach einem der Ansprüche 1 bis 5, wobei der Schritt des Beschichtens der essbaren Kerne durch ein Drehen der drehbaren Trommel (18) Folgendes umfasst:
Auftragen eines Isomaltbeschichtungssirups auf eine Oberfläche eines essbaren Kerns;
Trocknen des beschichteten essbaren Kerns; und
Wiederholen der Schritte des Auftragens und des Trocknens, um einen harten mit Isomalt beschichteten Kern zu bilden;
wobei der Isomaltbeschichtungssirup Isomalt, ein Tensid, das einen HLB-Wert von mehr als 10 aufweist, und ein Beschichtungsbindemittel umfasst.

7. Verfahren nach Anspruch 6, wobei das Isomalt in einer Menge von etwa 85 bis etwa 98 Gewichtsprozent eines Trockengewichts des Beschichtungssirups vorhanden ist.

8. Verfahren nach Anspruch 6 oder Anspruch 7, wobei das Tensid ein Polysorbat oder ein Saccharoseester einer Fettsäure ist und/oder wobei das Tensid Folgendes aufweist:
einen HLB-Wert von mehr als 12; oder
einen HLB-Wert von etwa 13 bis etwa 18.

9. Verfahren nach einem der Ansprüche 6 bis 8, wobei das Tensid in einer Menge von etwa 0,01 bis etwa 0,65 Gewichtsprozent des Trockengewichts des Beschichtungssirups vorhanden ist, vorzugsweise wobei das Tensid Polysorbat 60 ist, das in einer Menge von 0,10 bis etwa 0,65 Gewichtsprozent des Trockengewichts des Beschichtungssirups vorhanden ist.

10. Verfahren nach einem der Ansprüche 6 bis 9, wobei das Beschichtungsbindemittel in einer Menge von etwa 1,0 bis etwa 5,0 Gewichtsprozent des Trockengewichts des Beschichtungssirups vorhanden ist, und/oder wobei das Beschichtungsbindemittel Gummi arabicum, Pektin, Akaziengummi, ein Alginat, Agar, ein Carageenan, Guargummi, Xanthangummi, Johannisbrotkernmehl, Gelatine, Gellangummi, Galaktomannan, Tragantgummi, Karayagummi, Curdlan, Konjak, Chitosan, Xyloglucan, Beta-Glucan, Furcellaran, Ghatti-Gummi, Tamarin, ein bakterielles Gummi, ein modifiziertes natürliches Gummi, Propylenglykolalginat, Carboxymethyl-Johannisbrotkernmehl, Pektin mit niedrigem Methoxylgehalt, eine modifizierte Cellulose, mikrokristalline Cellulose, Carboxymethylcellulose, Methylcellulose, Hydroxypropylmethylcellulose, Hydroxypropylcellulose oder eine Kombination davon, vorzugsweise Gummi arabicum in einer Menge von etwa 1,0 bis etwa 5,0 Gewichtsprozent des Trockengewichts des Beschichtungssirups ist.

11. Verfahren nach einem der Ansprüche 6 bis 10, wobei der Isomaltbeschichtungssirup außerdem einen Zuckerpolyolsirup, eine Lebensmittelsäure, ein Farbmittel oder eine Kombination davon umfasst.

12. Verfahren nach einem der Ansprüche 6 bis 11, das ferner das Auftragen einer trockenen Ladung, eines Geschmacksstoffs, eines hochintensiven Süßungsmittels, eines Sensats, eines Geschmacksmodulators oder -potenzierers, einer Lebensmittelsäure oder eines Salzes davon, eines funktionellen Inhaltsstoffs, eines Wachses oder einer Kombination davon auf die Oberfläche des essbaren Kerns nach einem Auftragen des Isomaltbeschichtungssirups umfasst.

13. Verfahren zum Beschichten von essbaren Kernen nach Anspruch 1, wobei das Verfahren Folgendes umfasst:
Bereitstellen des mindestens einen Ablenkblechs (14), das sich von der inneren Trommelwand (16) erstreckt, wobei das Ablenkblech (14) an der inneren Trommelwand (16) an einer vorderen Stelle relativ zu der Drehung der drehbaren Trommel (18) und einer hinteren Stelle der drehbaren Trommel (18) befestigt ist;
Anordnen mindestens der vorderen Stelle in einer gewünschten Position relativ zu dem mindestens einen belüfteten Abschnitt (24); und
Begrenzen eines Anhaftens der essbaren Kerne an der inneren Trommelwand (16) über das Anordnen an der vorderen Stelle in der gewünschten Position relativ zu dem mindestens einen belüfteten Abschnitt (24).

14. Verwenden eines Verfahrens gemäß Anspruch 5 zum Begrenzen des Anhaftens der essbaren Kerne an der inneren Trommelwand (16).

## Revendications

1. Procédé destiné à l'enrobage de noyaux comestibles, le procédé comprenant :
la fourniture des noyaux comestibles et du matériau d'enrobage dans une cavité de tambour d'un système d'enrobage à tambour, le système comprenant :
un tambour rotatif (18) comportant une paroi de tambour interne (16) définissant la cavité de tambour ;
un dispositif de distribution d'enrobage conçu pour distribuer un matériau d'enrobage aux noyaux comestibles au sein de ladite cavité de tambour ;
au moins une partie ventilée (24) de ladite paroi de tambour interne (16), ladite partie ventilée (24) comportant une pluralité d'ouvertures qui permettent à un fluide de s'écouler dans ladite cavité de tambour et hors de celle-ci ; et
au moins un déflecteur (14) s'étendant à partir de ladite paroi de tambour interne (16), ledit déflecteur (14) étant fixé à ladite paroi de tambour interne (16) au niveau d'au moins un point de fixation (22a, 22b) disposé le long de ladite partie ventilée (24) ; et
l'enrobage des noyaux comestibles par l'intermédiaire d'une rotation du tambour rotatif (18),
dans lequel ledit au moins un déflecteur (14) est fixé à ladite paroi de tambour interne (16) par l'intermédiaire d'au moins deux pattes (20a, 20b) s'étendant entre ladite paroi de tambour interne (16) et ledit au moins un déflecteur (14), au moins l'une parmi lesdites au moins deux pattes (20a) étant fixée à ladite paroi de tambour interne (16) au niveau dudit au moins un point de fixation (22a) disposé le long de ladite partie ventilée (24), dans lequel l'autre desdites au moins deux pattes (20b) est fixée à ladite paroi de tambour interne (16) au niveau d'un point de fixation (22b) disposé à l'extérieur de ladite partie ventilée (24).

2. Procédé selon la revendication 1, dans lequel le système comporte en outre une barre de montage (26) disposée au moins partiellement à travers ladite partie ventilée (24), dans lequel ledit au moins un déflecteur (14) est fixé à ladite barre de montage (26) au niveau dudit au moins un point de fixation (22a, 22b) disposé le long de ladite partie ventilée (24), de préférence dans lequel ledit au moins un déflecteur (14) est fixé à ladite paroi de tambour interne (16) par l'intermédiaire d'au moins deux pattes (20a, 20b) s'étendant entre ladite barre de montage (26) et ledit au moins un déflecteur (14), au moins l'une parmi lesdites au moins deux pattes (20a) étant fixée à ladite barre de montage (26) au niveau dudit au moins un point de fixation (22a) disposé le long de ladite partie ventilée (24), et dans lequel l'autre desdites au moins deux pattes (20b) est fixée à ladite barre de montage (26) au niveau d'un point de fixation (22b) disposé à l'extérieur de ladite partie ventilée (24).

3. Procédé selon la revendication 2, dans lequel ladite barre de montage (26) est une barre de montage ventilée comportant une pluralité d'ouvertures.

4. Procédé selon la revendication 1, dans lequel ledit au moins un déflecteur (14) comporte une forme trapézoïdale.

5. Procédé selon l'une quelconque des revendications 1 à 4, dans lequel, par rapport à une direction de rotation de tambour :
(i) ledit au moins un point de fixation (22a) disposé le long de ladite partie ventilée (24) est agencé en avant d'un second point de fixation (22b), dans lequel ledit second point de fixation (22b) est disposé à l'extérieur de ladite partie ventilée (24),
et/ou
(ii) ledit au moins un déflecteur (14) est fixé à ladite paroi de tambour interne (16) par l'intermédiaire d'au moins deux pattes s'étendant entre ladite paroi de tambour interne (16) et ledit au moins un déflecteur (14), ou par l'intermédiaire des deux pattes s'étendant entre une barre de montage disposée au moins partiellement à travers ladite partie ventilée (24) et ledit au moins un déflecteur (14).

6. Procédé selon l'une quelconque des revendications 1 à 5, dans lequel l'étape d'enrobage des noyaux comestibles par l'intermédiaire d'une rotation du tambour rotatif (18) comprend :
l'application d'un sirop d'enrobage d'isomalt sur une surface d'un noyau comestible ;
le séchage du noyau comestible enrobé ; et
la répétition des étapes d'application et de séchage pour former un noyau enrobé d'isomalt dur ;
le sirop d'enrobage d'isomalt comprenant de l'isomalt, un tensioactif ayant une valeur HLB supérieure à 10, et un liant d'enrobage.

7. Procédé selon la revendication 6, dans lequel l'isomalt est présent en une quantité d'environ 85 à environ 98 % en poids de poids sec du sirop d'enrobage.

8. Procédé selon la revendication 6 ou la revendication 7, dans lequel le tensioactif est un polysorbate ou un ester de saccharose d'acide gras, et/ou dans lequel le tensioactif a
une valeur HLB supérieure à 12 ; ou
une valeur HLB d'environ 13 à environ 18.

9. Procédé selon l'une quelconque des revendications 6 à 8, dans lequel le tensioactif est présent en une quantité d'environ 0,01 à environ 0,65 % en poids de poids sec du sirop d'enrobage, de préférence dans lequel le tensioactif est le polysorbate 60 présent en une quantité de 0,10 à environ 0,65 % en poids de poids sec du sirop d'enrobage.

10. Procédé selon l'une quelconque des revendications 6 à 9, dans lequel le liant d'enrobage est présent en une quantité d'environ 1,0 à environ 5,0 % en poids de poids sec du sirop d'enrobage, et/ou dans lequel le liant d'enrobage est la gomme arabique, la pectine, la gomme d'acacia, un alginate, l'agar, une carragénane, la gomme de guar, la gomme de xanthane, la gomme de caroube, la gélatine, la gomme gellane, un galactomannane, la gomme adragante, la gomme de karaya, le curdlan, le konjac, le chitosane, le xyloglucane, le beta glucane, le furcelleran, la gomme ghatti, le tamarin, une gomme bactérienne, une gomme naturelle modifiée, l'alginate de glycol propylénique, la gomme de caroube de carboxyméthyle, la pectine faiblement méthoxylée, une cellulose modifiée, la cellulose microcristalline, la carboxyméthylcellulose, la méthylcellulose, l'hydroxypropylméthylcellulose, l'hydroxypropylcellulose, ou leur combinaison, de préférence de la gomme arabique présente en une quantité d'environ 1,0 à environ 5,0 % en poids de poids sec du sirop d'enrobage.

11. Procédé selon l'une quelconque des revendications 6 à 10, dans lequel le sirop d'enrobage d'isomalt comprend en outre un sirop de polyol de sucre, un acide alimentaire, un colorant, ou leur combinaison.

12. Procédé selon l'une quelconque des revendications 6 à 11, comprenant en outre l'application d'une charge sèche, d'un agent aromatisant, d'un édulcorant de haute intensité, d'un agent sensoriel, d'un modulateur d'arôme ou de potentialisateur, d'un acide alimentaire ou son sel, d'un ingrédient fonctionnel, d'une cire, ou de leur combinaison à la surface du noyau comestible après une application du sirop d'enrobage d'isomalt.

13. Procédé d'enrobage de noyaux comestibles selon la revendication 1, le procédé comprenant :
la fourniture de l'au moins un déflecteur (14) s'étendant à partir de ladite paroi de tambour interne (16), ledit déflecteur (14) étant fixé à ladite paroi de tambour interne (16) au niveau d'un emplacement avant par rapport à la rotation dudit tambour rotatif (18) et d'un emplacement arrière dudit tambour rotatif (18) ;
la disposition d'au moins ledit emplacement vers l'avant au niveau d'une position souhaitable par rapport à ladite au moins une partie de ventilation (24) ; et
la limitation de l'adhérence des noyaux comestibles à ladite paroi de tambour interne (16) par l'intermédiaire de ladite disposition au niveau dudit emplacement avant au niveau de ladite position souhaitable par rapport à ladite au moins une partie de ventilation (24).

14. Utilisation d'un procédé selon la revendication 5 pour limiter l'adhérence des noyaux comestibles à ladite paroi de tambour interne (16).
